# EUROPEAN PATENT APPLICATION

(11) **EP 4 459 332 A1**
(43) Date of publication of application: **06.11.2024**
(21) Application number: 22914540.4
(22) Date of filing: 23.12.2022
(51) Int. Cl.: G01V 5/00, G01N 23/04

(54) **MULTI-RAY SOURCE INSPECTION DEVICE AND INSPECTION METHOD**

(30) Priority: 30.12.2021 CN 202111648991
(71) Applicant: Nuctech Company Limited, TongFang Building Shuangqinglu Haidian District Beijing 100084 (CN)
(72) Inventor: CHEN, Zhiqiang, Beijing 100084 (CN); LI, Yuanjing, Beijing 100084 (CN); SUN, Shangmin, Beijing 100084 (CN); ZONG, Chunguang, Beijing 100084 (CN); NI, Xiulin, Beijing 100084 (CN); ZOU, Xiang, Beijing 100084 (CN); YIN, Wei, Beijing 100084 (CN); YU, Weifeng, Beijing 100084 (CN)
(74) Representative: Gunzelmann, Rainer
(86) International application number: PCT/CN2022/141411
(87) International publication number: WO 2023/125286

(57) **Abstract**

Provided is a multi-ray source inspection apparatus, including: a first inspection device (10) configured to acquire a two-dimensional first transmission image of an inspected object and a second inspection device (20) configured to acquire a second transmission image of the inspected object including three-dimensional information. A first radiation beam and a second radiation beam are emitted in a time-sharing manner, and the two-dimensional first transmission image and the second transmission image including the three-dimensional information are respectively acquired after the inspected object passes an inspection channel once. An inspection method using multiple ray sources is further provided.

## Description

### TECHNICAL FIELD

The present disclosure relates to the field of security inspection. In particular, the present disclosure relates to a multi-ray source inspection apparatus and inspection method.

### BACKGROUND

Generally, industrial X-ray imaging refers to a nuclear imaging technology applied in industry. A principle of X-ray imaging is that after an interaction between X-rays and objects, different objects may transmit different doses of X-rays, and an image may be obtained according to detected residual X-rays.

Common methods include two-dimensional imaging and three-dimensional computed tomography (CT). When a radiation beam is used to irradiate an object, a transmitted radiation beam is collected and a two-dimensional image of the object may be obtained using a computer through a specific algorithm.

CT imaging is to scan different cross-sections to obtain X-ray images of these sections, calculate a linear attenuation coefficient of the object, and obtain a voxel data image including three-dimensional information after certain technical processing.

According to the principle of X-ray imaging, in order to obtain information of the entire object, an X-ray energy needs to be high enough to penetrate a scanned object. For a large inspected object such as a container, a high energy radiation is generally used, which requires a high anti-interference performance of an apparatus, since the radiation may interfere greatly with imaging and cause a large image noise. In addition, the information obtained by CT imaging is enormous, and it is difficult for working personnel to complete an examination of CT images.

Therefore, there is a need to provide an apparatus that may realize a high inspection accuracy while reducing a workload of personnel and improving a work efficiency.

### SUMMARY

According to an aspect of the present disclosure, a multi-ray source inspection apparatus is provided, defining an inspection channel for an inspected object to pass, the multi-ray source inspection apparatus includes: one or more first inspection devices configured to emit a first radiation beam in a first pulse mode, and acquire a two-dimensional first transmission image by detecting a radiation transmitted through the object in the inspection channel; and one or more second inspection devices configured to emit a second radiation beam in a second pulse mode, and acquire a second transmission image including three-dimensional information by detecting a radiation transmitted through the object in the inspection channel, the multi-ray source inspection apparatus is configured such that the one or more first inspection devices emit the radiation beam at a different time from the one or more second inspection devices, and the first transmission image and the second transmission image of the object are respectively acquired after the object passes the inspection channel once.

In an embodiment, the first pulse mode and the second pulse mode are configured such that: the first radiation beam starts to be emitted after the second radiation beam disappears or has disappeared for a first time period; and when the second radiation beam is emitted, the first radiation beam disappears or has disappeared for a second time period.

In an embodiment, the second pulse mode is separately preset by the one or more second inspection devices; and the multi-ray source inspection apparatus further includes a controller configured to apply the first pulse mode to an emission of the first radiation beam from the one or more first inspection devices based on the second pulse mode.

In an embodiment, the multi-ray source inspection apparatus further includes: an additional radiation detection sensor provided adjacent to the one or more second inspection devices so as to sense a radiation when the one or more second inspection devices emit the second radiation beam, the additional radiation detection sensor is configured to communicate with the controller to send a sensing result to the controller; and based on the sensing result received from the additional radiation detection sensor, the controller is configured to: determine that the second radiation beam has been emitted and control the one or more first inspection devices not to emit the first radiation beam, in response to the radiation being sensed by the additional radiation detection sensor; and determine that the second radiation beam has disappeared and control the one or more first inspection devices to emit the first radiation beam immediately or after a delay of the first time period, in response to no radiation being sensed by the additional radiation detection sensor.

In an embodiment, the multi-ray source inspection apparatus further includes: one or more rotary devices, each of the one or more rotary devices is configured to support one or more of the one or more second inspection devices and is rotatable by an arbitrary angle in a range of 0-360 degrees at a predetermined angular velocity, so that the one or more of the one or more second inspection devices acquire the second transmission image of the object passing transversely through a rotation plane of the one or more rotary devices.

In an embodiment, the additional radiation detection sensor is arranged along a rotation trajectory of the one or more rotary devices, so that the second radiation beam emitted when the one or more rotary devices rotate to an arbitrary angle is sensed by the additional radiation detection sensor.

In an embodiment, the one or more first inspection devices are configured to emit the first radiation beam in the first pulse mode from a side portion, a top portion or a bottom portion of the inspection channel.

In an embodiment, the object is a container.

According to another aspect of the present disclosure, an inspection method using multiple ray sources is provided, including: emitting a first radiation beam in a first pulse mode and acquiring a two-dimensional first transmission image by detecting a radiation transmitted through an object in an inspection channel, by using one or more first inspection devices; and emitting a second radiation beam in a second pulse mode and acquiring a second transmission image including three-dimensional information by detecting a radiation transmitted through the object in the inspection channel, by using one or more second inspection devices, the first transmission image and the second transmission image of the object are respectively acquired by the one or more first inspection devices and the one or more second inspection devices after the object passes the inspection channel once.

In an embodiment, the inspection method further includes: inspecting the two-dimensional first transmission image to determine whether a suspicious object is included; and locating a site of a suspicious object and determining the suspicious object at a corresponding site using the second transmission image, in response to determining that the inspected object including the suspicious object.

In an embodiment, the first pulse mode and the second pulse mode are configured such that: the first radiation beam starts to be emitted after the second radiation beam disappears or has disappeared for a first time period; and when the second radiation beam is emitted, the first radiation beam disappears or has disappeared for a second time period.

In an embodiment, the second pulse mode is separately preset by the one or more second inspection devices; and based on the second pulse mode, the first pulse mode is applied to an emission of the first radiation beam from the one or more first inspection devices.

In an embodiment, the inspection method further includes: providing an additional radiation detection sensor adjacent to the one or more second inspection devices to sense a radiation when the one or more second inspection devices emit the second radiation beam; determining that the second radiation beam has been emitted and controlling the one or more first inspection devices not to emit the first radiation beam, in response to the radiation being sensed by the additional radiation detection sensor; and determining that the second radiation beam has disappeared and controlling the one or more first inspection devices to emit the first radiation beam immediately or after a delay of the first time period, in response to no radiation being sensed by the additional radiation detection sensor.

In an embodiment, the inspection method further includes: using one or more rotary devices, each of the one or more rotary devices is configured to support one or more of the one or more second inspection devices and is rotatable by an arbitrary angle in a range of 0-360 degrees at a predetermined angular velocity, so that the one or more of the one or more second inspection devices acquire the second transmission image of the object passing transversely through a rotation plane of the one or more rotary devices.

In an embodiment, the additional radiation detection sensor is arranged along a rotation trajectory of the one or more rotary devices, so that the second radiation beam emitted when the one or more rotary devices rotate to an arbitrary angle is sensed by the additional radiation detection sensor.

In an embodiment, the one or more first inspection devices are configured to emit the first radiation beam in the first pulse mode from a side portion, a top portion or a bottom portion of the inspection channel.

In an embodiment, the object is a container.

### BRIEF DESCRIPTION OF THE DRAWINGS

One or more embodiments of the present disclosure will now be described, by way of example only, with reference to the accompanying drawings. In the accompanying drawings:
FIG. 1 shows a top view of a multi-ray source inspection apparatus according to the embodiments of the present disclosure; and
FIG. 2 shows a top view of a multi-ray source inspection apparatus according to the embodiments of the present disclosure.

### DETAILED DESCRIPTION OF EMBODIMENTS

In the following embodiments, terms "first", "second", "third", etc. are used to distinguish different components rather than to sort or indicate priority. Terms indicating orientations such as "top portion", "side portion", and "bottom portion" in the specification do not mean absolute orientations but indicate relative positions between components.

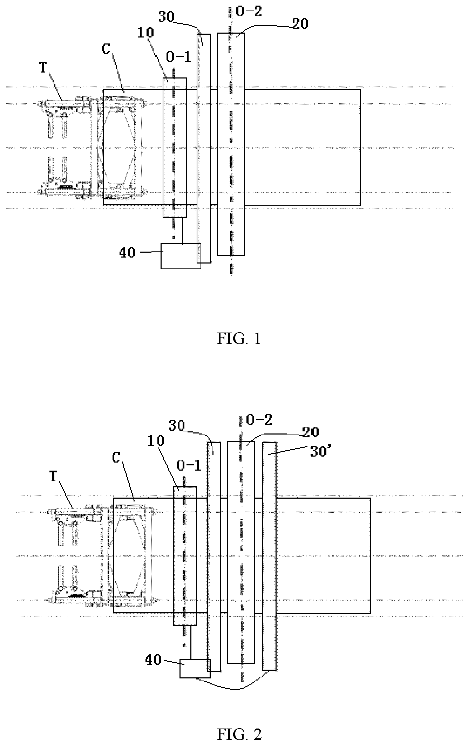

As shown in FIG. 1, the embodiments of the present disclosure provide a multi-ray source inspection apparatus that defines an inspection channel for an inspected object to pass. In an embodiment, the multi-ray source inspection apparatus includes a first inspection device 10 and a second inspection device 20. The first inspection device 10 is configured to emit a first radiation beam in a first pulse mode, and acquire a two-dimensional first transmission image by detecting a radiation transmitted through an object in the inspection channel. The second inspection device 20 is configured to emit a second radiation beam in a second pulse mode, and acquire a second transmission image including three-dimensional information by detecting a radiation transmitted through the object in the inspection channel. The object may be, for example, a large object such as a container C, a box car, a truck, a train car, or the like.

The first inspection device 10 and the second inspection device 20 may be transmission-type inspection devices, for example, each including a radiation source and a detector. The radiation source may be an accelerator that emits high-energy X-rays to transmit through the inspected object. The accelerator may be an apparatus that generates high energy X-rays by applying high voltage electricity and bombarding a target material using high energy electrons. Here, the accelerator is considered to include devices such as a collimator to emit a predetermined radiation beam, for example, a fan-shaped radiation beam. The radiation source may also be other sources that generate high-energy rays. After a radiation signal transmitted through the inspected object is detected by the detector, a radiation image of the inspected object may be obtained through calculation. Here, obtaining the radiation image through calculation may be performed using existing two-dimensional transmission imaging technology and CT imaging technology including the three-dimensional information, which will not be repeated herein.

In an embodiment, the first inspection device 10 includes a first radiation source and a first detector. For example, the first radiation source is arranged on a side of the inspection channel, and the first detector is arranged on another side of the inspection channel so as to detect the radiation transmitted through the container C and obtain a two-dimensional radiation image of the inspected object through calculation. The first inspection device 10 may be fixedly arranged relative to the inspection channel. According to the embodiments of the present disclosure, the first inspection device 10 may be arranged in a variety of ways. For example, the first radiation source is arranged on a top side of the inspection channel, and the first detector is arranged on a bottom side of the inspection channel opposite.to the top side Alternatively, in another embodiment, the first radiation source of the first inspection device 10 is arranged on the bottom side of the inspection channel, and the first detector is arranged on the top side of the inspection channel opposite to the bottom side. Alternatively, in still another embodiment, the first radiation source of the first inspection device 10 is arranged on a right side of the inspection channel, and the first detector is arranged on a left side and/or bottom side of the inspection channel. Other arrangements are also possible and will not be described in detail.

In an embodiment, the second inspection device 20 may be configured to obtain an image of the inspected object including the three-dimensional information. For example, the second inspection device 20 is rotatable around the inspected object so that the second radiation beam may be emitted toward the object from a plurality of viewing angles. After a radiation signal transmitted through the object is detected by the detector of the second inspection device 20, an image (CT image) of the inspected object including the three-dimensional information may be obtained through calculation. The second inspection device 20 may include a second radiation source and a second detector. During a process of the second inspection device 20 rotating around the inspected object, a relative position between the second radiation source and the second detector may be fixed.

In the embodiment, the inspected object may pass the inspection channel at a predetermined speed. While the object passes the inspection channel, the first inspection device 10 and the second inspection device 20 may operate independently so as to acquire the two-dimensional image of the inspected object (e.g., container C) and the image of the inspected object including the three-dimensional information. For example, the first inspection device 10 may emit the first radiation beam in the first pulse mode. The first radiation beam may be, for example, a fan-shaped radiation beam, and the fan shape is substantially perpendicular (but not need to be strictly perpendicular) to a conveying direction of the container C, so that each time a pulse energy of the first radiation beam transmit through a section or a segment of the container C, the radiation is scattered by a material of the section of the container C, and the detector of the first inspection device 10 may detect the transmitted radiation so as to obtain material information of the section. In FIG. 1 and FIG. 2, dashed lines 0-1 and O-2 are respectively used to schematically represent a scanning trajectory of the first radiation beam and a scanning trajectory of the second radiation beam seen from a top view In FIG. 1 and FIG. 2, the container C moves from a right side to a left side through a traction of a traction mechanism T. Alternatively, the container C may also move from the left side to the right side.

In another embodiment, the first radiation beam may irradiate the inspected object (e.g., container C) obliquely, so that the first inspection device and the second inspection device may realize dual-viewing angle or multi-viewing angle inspection so as to obtain more abundant information.

In an embodiment, a plurality of first inspection devices are provided, where the first radiation beam of one first inspection device may irradiate the inspected object (e.g. container C) vertically, and the first radiation beam of another first inspection device may irradiate the inspected object (e.g., container C) obliquely. In the embodiment, the second inspection device may vertically emit the second radiation beam for inspection.

In other embodiments, the first radiation beam may have other shapes. Collecting the transmitted radiation so that the information of the irradiated object is obtained using a computer may be realized through existing technologies, which will not be described here.

The second inspection device 20 may rotate around the container C during a movement process of the container C, and emit the second radiation beam in the second pulse mode. The second radiation beam may be, for example, a fan-shaped radiation beam, and the fan shape is substantially perpendicular to the conveying direction of the container C, so that a pulse energy of the second radiation beam irradiates the container C from a viewing angle and transmits through a section of the container C at each time. The second detector of the second inspection device 20 detects the transmitted radiation to obtain material information of the section. The second inspection device 20 may emit the second radiation beam toward the container C from multiple viewing angles through rotation actions, thereby obtaining the radiation transmitted through the container C, and obtaining an image including the three-dimensional information through calculation, which is the well-known computed tomography (CT).

In the embodiment, after the inspected object (e.g., container C) passes the inspection channel, the multi-ray source inspection apparatus may acquire the two-dimensional image of the container C through the first inspection device 10, and acquire the CT image of the container C through the second inspection device 20, thereby simultaneously acquiring the two-dimensional image and the CT image through passing the inspected object once, which has a beneficial effect in practice. Working personnel performing the inspection may obtain the two-dimensional image and the CT image of the container C simultaneously from the multi-ray source inspection apparatus after the container C passes, so that the working personnel may firstly browse the two-dimensional image to locate a suspicious site including a suspicious object of the container C in the two-dimensional image, and then study a corresponding site in the CT image to determine whether a suspicious object is included. In this way, it is possible to avoid studying all the CT images, so that a workload may be reduced while an accuracy of inspection may be ensured.

In an embodiment, the multi-ray source inspection apparatus is configured such that one or more first inspection devices may emit radiations at a first time, and one or more second inspection devices may emit radiations at a second time different from the first time. A first transmission image and a second transmission image of the object may be respectively acquired after the object passes the inspection channel once. According to the embodiment, when the one or more first inspection devices emit pulse radiations, the one or more second inspection devices do not emit pulse radiations. Such configuration may avoid the radiation emitted by the one or more first inspection devices during operation from interfering with an accuracy of the one or more second inspection devices, when the one or more first inspection devices and the one or more second inspection devices operate simultaneously.

In an embodiment, the multi-ray source inspection apparatus may include two or more first inspection devices 10, and may also include two or more second inspection devices 20. For example, two first inspection devices 10 may be arranged along the inspection channel, so that when the inspected object (e.g., container C) passes the inspection channel, a head portion of the container C passes one first inspection device 10 while a middle portion of the container C passes the other first inspection device 10, and the two first inspection devices 10 may inspect halves of the container C respectively. In another embodiment, the two second inspection devices 20 may rotate in opposite directions respectively so as to obtain transmission images from more viewing angles and obtain clearer CT images through calculation.

In an embodiment, the first pulse mode and the second pulse mode are configured such that the first radiation beam starts to be emitted after the second radiation beam disappears or has disappeared for a first time period, and when the second radiation beam is emitted the first radiation beam disappears or has disappeared for a second time period. In the embodiment, the first radiation beam and the second radiation beam are emitted in a time-sharing manner. The time-sharing emission means that the first radiation beam is not emitted when the second radiation beam is emitted, and the first radiation beam is emitted only during an intermittent time period when the second radiation beam ceases stops being emitted. The time-sharing emission of the first radiation beam and the second radiation beam may prevent the second detector from being affected by a scattered radiation from the first radiation beam when the second detector detects the second radiation, and prevent the first detector from being affected by a scattered radiation from the second radiation beam when the first detector detects the transmitted first radiation, so that an image noise may be reduced.

In order to realize the time-sharing emission, it is needed to set the first pulse mode and the second pulse mode. In the present disclosure, the second pulse mode in which the second inspection device 20 emits the second radiation beam may be separately preset by the second inspection device 20. For example, the second inspection device 20 may have a timing mechanism or a separate control device so as emit the second radiation beam in the second pulse mode. After the second pulse mode of the second inspection device 20 is set, the emission mode of the first radiation beam of the first inspection device 10 may be controlled depending on the emission mode of the second radiation beam. That is, the first radiation beam is emitted only during a time period when the second radiation beam is not emitted, and a duration of the first radiation beam in pulse form is set such that: the emission of the first radiation beam stops before the emission of the second radiation beam in pulse form. Accordingly, the first radiation beam is kept not emitted or an emission dose of the first radiation beam is zero when the second radiation beam in pulse form is emitted, and the first radiation beam is emitted when the second radiation beam is not emitted or the emission dose of the second radiation beam is zero, so that the time-sharing emission of the first radiation beam and the second radiation beam is realized.

In an embodiment, the multi-ray source inspection apparatus may further include a controller 40. The controller 40 may apply the first pulse mode to the emission of the first radiation beam of the first inspection device 10 based on the second pulse mode. In other words, the controller 40 may control the first inspection device 10 not to emit the first radiation beam when the second radiation beam is emitted; and control the first inspection device 10 to emit the first radiation beam during a time period when the second radiation beam is not emitted. In this way, the second radiation beam is in the pulse form, the first radiation beam is in the pulse form, and the emissions of the two are substantially alternating. In an embodiment, the controller 40 may be connected to the first inspection device 10 via a cable for a signal transmission, for example, the controller may send a control signal to the first inspection device.

In other embodiments of the present disclosure, every two times the second inspection device 20 emits pulses of the second radiation beam, the first inspection device 10 emits a pulse of the first inspection beam once accordingly. The present disclosure does not strictly limit an alternating emission mode of the first radiation beam and the second radiation beam, as long as the transmission imaging may be realized. For example, commonly used values are available for a pulse frequency of the first pulse mode, a pulse frequency of the second pulse mode and a duration of a rising edge of the radiation beam, etc., and different frequencies, pulse durations, pulse doses and other parameters should not be used as limitations to the embodiments of the present disclosure.

In an embodiment, the multi-ray source inspection apparatus includes an additional radiation detection sensor 30. The additional radiation detection sensor 30 may sense a radiation and is provided adjacent to the second inspection device 20. When the second radiation beam is emitted, the second radiation beam is scattered by the inspected object (e.g., container C) or other structural materials, and the scattered radiation may be sensed by the additional radiation detection sensor 30 adjacent to the second inspection device 20. It may then be determined that the second radiation beam has been emitted, for example, a rising edge of the pulse of the second radiation beam may be determined. Thereby, the multi-ray source inspection apparatus stops emitting the first radiation beam or does not emit the first radiation beam, for example, through the controller 40. In this way, the multi-ray source inspection apparatus may realize the time-sharing emission of radiation beams from the first inspection device 10 and the second inspection device 20, avoiding radiation interference between the first inspection device 10 and the second inspection device 20. In actual applications, the second inspection device 20 needs to rotate and may not realize a wired communication (a physical connection via a cable) with other apparatuses on the ground such as the first inspection device 10, and therefore time-sharing cooperation between the emission actions of high-frequency pulse radiations of the first inspection device 10 and the second inspection device 20 may not be realized through physical communication. The embodiments of the present disclosure may be implemented to determine the emission of the second radiation beam by sensing the scattered radiation of the second radiation beam, thereby controlling the first radiation beam of the first inspection device 10 to be stopped when the second radiation beam is emitted, and to be emitted when the second radiation beam is not emitted, so that the time-sharing emission of the first radiation beam and the second radiation beam may be realized. In the embodiment, the controller 40 is not in communication with the second inspection device 20, and the controller 40 is communicatively connected to the additional radiation detection sensor 30 and the first inspection device 10. The embodiment may avoid providing an additional communication device to realize a communication between the first inspection device 10 and the second inspection device 20, and thus avoid a control risk caused by noise during a communication process.

In an embodiment, the multi-ray source inspection apparatus may include a controller 40 or a control module which is connected to the first inspection device 10 and the additional radiation detection sensor 30 so as to realize communication and control. When a radiation is sensed, the additional radiation detection sensor 30 may communicate with the controller 40 to send a sensing result to the controller 40.

The controller 40 may control an operation of the first inspection device 10 based on the sensing result of the additional radiation detection sensor 30. For example, when a radiation is sensed by the additional radiation detection sensor 30, it is determined that the second radiation beam has been emitted, and the first inspection device 10 is controlled not to emit the first radiation beam; when no radiation is sensed by the additional radiation detection sensor 30, it is determined that the second radiation beam has disappeared, and the first inspection device 10 is controlled to emit the first radiation beam immediately or after a delay of a first time period.

In an embodiment, the multi-ray source inspection apparatus may further include a rotary device which is configured to support the second inspection device 20. The rotary device may rotate by an arbitrary angle in a range of 0-360 degrees at a predetermined angular velocity, and the second inspection device 20 supported by the rotary device may thus be rotated. The inspected object (e.g., container C) may transversely pass a rotation plane of the rotary device. When the container C passes the rotary device, the rotary device may rotate the second inspection device 20, and the second inspection device 20 may emit the pulse of the second radiation beam so as to acquire the second transmission image (CT image) of the container C including three-dimensional information.

In an embodiment, two or more second inspection devices 20 may be installed or supported on the rotary device. The two or more second inspection devices 20 may operate independently to respectively obtain transmission radiation signals of the inspected object and finally obtain a synthesized CT image.

In an embodiment, the multi-ray source inspection apparatus may include two or more rotary devices, each of which supports one or more second inspection devices 20. The present disclosure is not limited to the above-mentioned embodiments.

In an embodiment, the rotary device may be a structure such as a rotary ring. In FIG. 1, the rotary ring is shown as across the container C, and the container C passes a rotation plane of the rotary ring. A dashed line O-2 in FIG. 1 may also be regarded as a center line of the rotary ring. The second radiation source and the second detector of the second inspection device 20 are arranged at appropriate positions of the rotary ring. As the rotary ring rotates, the second radiation source may emit the second radiation beam at different positions, so that the radiation beams may be emitted from different viewing angles.

In an embodiment, the additional radiation detection sensor 30 is arranged along a rotation trajectory of the rotary device to ensure that the radiation of the second radiation beam emitted from the second inspection device 20 may be sensed when the rotary device rotates to an arbitrary angle. The additional radiation detection sensor 30 may include a plurality of sensors. In FIG. 1, the additional radiation detection sensor 30 is shown as extending parallel to the rotary device, and may be a ring structure across the inspection channel (or the container C shown). However, it should be understood that the additional radiation detection sensor 30 may have a discrete shape distributed on the structure shown in FIG. 1.

In the embodiment of FIG. 2, the additional radiation detection sensor 30 is shown as a double-ring structure extending parallel to the rotary device, and the rotary device is arranged between the two ring structures. Providing the additional radiation detection sensor 30 on two sides of the rotary device may improve a sensitivity of detecting the radiation generated by the second radiation beam. The additional radiation detection sensor 30 mainly detects the scattered radiation of the second radiation beam scattered by the container C.

In the present disclosure, the first inspection device 10 and the second inspection device 20 are transmission-type inspection devices, that is, the first inspection device and the second inspection device obtain material information or other information inside the inspected object by irradiating the inspected object with rays so as to collect the transmitted radiation. The first inspection device and the second inspection device may include a radiation source and a detector, which are spaced from each other by a distance. The inspected object is between the radiation source and the detector to allow the radiation to transmit through. In such an arrangement, the radiation source and the detector are not limited to specific positions on two sides of the inspected object, and the use of different accelerators or other radiation sources, detectors, etc. and their position arrangements should not be considered as limitations to the first inspection device 10 and the second inspection device 20 of the present disclosure. On the contrary, the multi-ray source inspection apparatus of the present disclosure may use any form of transmission-type inspection devices. In the present disclosure, the first inspection device 10 and the second inspection device 20 do not mean that the two have a precedence or other sequential relationships, but to represent two separate inspection devices, and also imply that each of them includes a radiation source and a corresponding detector.

In another aspect of the present disclosure, an inspection method using multiple ray sources is provided.

In an embodiment, the inspection method using multiple ray sources includes: a first inspection device 10 is used to emit a first radiation beam in a first pulse mode and acquire a two-dimensional first transmission image by detecting a radiation transmitted through an object in an inspection channel; and a second inspection device 20 is used to emit a second radiation beam in a second pulse mode and acquire a second transmission image including three-dimensional information by detecting a radiation transmitted through the object in the inspection channel. In the embodiment, the two-dimensional first transmission image of the object and the second transmission image of the object including the three-dimensional information are respectively acquired by the first inspection device 10 and the second inspection device 20 after the object passes the inspection channel once.

According to the inspection method of the embodiment, after the two-dimensional first transmission image of the object and the second transmission image of the object including the three-dimensional information are acquired, the two-dimensional first transmission image may be inspected to determine whether a suspicious object is included; and in response to determining that a suspicious object is included in the inspected object, a site of the suspicious object is found and a corresponding site of the second transmission image including the three-dimensional information is used to determine the suspicious object.

Since the two-dimensional transmission image of the inspected object (e.g., container C) is acquired, it is possible to intuitively view the two-dimensional transmission image to easily locate a suspicious site in the two-dimensional transmission image that may be the suspicious object, and then determine the suspicious object using the CT image including the three-dimensional information. In this way, the inspection may be greatly simplified, because it may take a lot of time and an inspection efficiency may be reduced if a large object such as the container C is inspected only using a CT image that includes a large amount of information, although the accuracy may be ensured. The inspection method of the embodiment may greatly improve the inspection efficiency while ensuring the inspection accuracy.

During the inspection process, the first radiation beam is emitted in the first pulse mode, and the second radiation beam is emitted in the second pulse mode. The first pulse mode and the second pulse mode are configured such that the first radiation beam starts to be emitted after the second radiation beam disappears or has disappeared for a first time period, and when the second radiation beam is emitted, the first radiation beam disappears or has disappeared for a second time period. In this way, a time-sharing emission of the first radiation beam and the second radiation beam may be realized.

In the embodiments of the present disclosure, the second inspection device 20 may be separately preset with the second pulse mode, and the first pulse mode may be applied to the emission of the first radiation beam of the one or more first inspection devices 10 based on the second pulse mode. This is advantageous for the rotatable second inspection device 20, because the rotatable second inspection device 20 is difficult to communicate with the ground, and it is difficult to control the pulse emission of the second radiation beam of the second inspection device 20 by the ground controller 40 in a wired manner. It is advantageous to control the emission of the second radiation beam by the second inspection device 20 itself (for example, by providing a timer).

According to the embodiments of the present disclosure, an additional radiation detection sensor 30 is provided adjacent to the second inspection device 20 so as to sense a radiation when the second inspection device 20 emits the second radiation beam. Since the second radiation beam is scattered when irradiating the inspected object (e.g., container C), the additional radiation detection sensor 30 provided adjacent to the second inspection device 20 may sense the radiation, and then it may be determined that the second radiation beam has been emitted.

According to the embodiments of the present disclosure, during the inspection process, when the additional radiation detection sensor 30 senses a radiation, it is determined that the second radiation beam has been emitted, and the first inspection device 10 is controlled not to emit the first radiation beam; and when the additional radiation detection sensor 30 senses no radiation, it is determined that the second radiation beam has disappeared, and the first inspection device 10 is controlled to emit the first radiation beam immediately or after a delay of a first time period. In this way, the time-sharing emission of the first radiation beam and the second radiation beam may be realized.

According to the inspection method of the present disclosure, a rotary device is provided to support the second inspection device 20 and rotate the second inspection device 20 by an arbitrary angle within a range of 0-360 degrees at a predetermined angular velocity. The second inspection device 20 supported on the rotary device may emit the second radiation beam in pulses toward the container C, collect a transmitted radiation transmitted through the inspected object (e.g., container C), and construct a CT image of the container C through calculation. It should be noted that during the inspection process, the container C may maintain a particular speed to travel along the inspection channel.

The additional radiation detection sensor 30 may be continuous or discretely distributed. For example, according to the inspection method of the present disclosure, a support structure is provided across the inspection channel, and the additional radiation detection sensor 30 is arranged on the support structure. The support structure may be a ring parallel to the rotary device, and may be constructed along a rotation trajectory of the rotary device. The additional radiation detection sensor 30 is distributed continuously or discretely on the support structure to ensure that the additional radiation detection sensor 30 may sense the radiation after the second radiation beam is emitted when the rotary device is rotated to an arbitrary angle. As shown in the top view of FIG. 1, the support structure has a profile parallel to the rotary device.

In an embodiment, the first inspection device 10 is configured to emit the first radiation beam in the first pulse mode from a side portion, a top portion or a bottom portion of the inspection channel.

According to the inspection method of the present disclosure, the inspected object may be a container C. In the present disclosure, the container C is used as an example for description, and it should be understood that a similar case applies to other inspected objects.

It should be understood that the embodiments described above are not all embodiments of the present disclosure. Without violating principles and purposes of the present disclosure, it is possible to combine the above embodiments and/or features to derive other embodiments according to the principles of the present disclosure.

Those skilled in the art may envisage other components, devices and features without departing from the scope of the appended claims. In particular, it should be noted that, as understood by those skilled in the art, one or more features included in one or more accompanying drawings may be integrated into a device shown in other drawings. It should be understood that the detailed descriptions and specific examples are given by way of illustration only and that various changes and modifications within the spirit and scope of the present disclosure will become apparent to those skilled in the art from such descriptions.

## Claims

1. A multi-ray source inspection apparatus, defining an inspection channel for an inspected object to pass, wherein the multi-ray source inspection apparatus comprises:
one or more first inspection devices configured to emit a first radiation beam in a first pulse mode, and acquire a two-dimensional first transmission image by detecting a radiation transmitted through the object in the inspection channel; and
one or more second inspection devices configured to emit a second radiation beam in a second pulse mode, and acquire a second transmission image comprising three-dimensional information by detecting a radiation transmitted through the object in the inspection channel,
wherein the multi-ray source inspection apparatus is configured such that the one or more first inspection devices emit the radiation beam at a different time from the one or more second inspection devices, and the first transmission image and the second transmission image of the object are respectively acquired after the object passes the inspection channel once.

2. The multi-ray source inspection apparatus according to claim 1, wherein the first pulse mode and the second pulse mode are configured such that: the first radiation beam starts to be emitted after the second radiation beam disappears or has disappeared for a first time period; and when the second radiation beam is emitted, the first radiation beam disappears or has disappeared for a second time period.

3. The multi-ray source inspection apparatus according to claim 2, wherein the second pulse mode is separately preset by the one or more second inspection devices; and
wherein the multi-ray source inspection apparatus further comprises a controller configured to apply the first pulse mode to an emission of the first radiation beam from the one or more first inspection devices based on the second pulse mode.

4. The multi-ray source inspection apparatus according to claim 3, further comprising:
an additional radiation detection sensor provided adjacent to the one or more second inspection devices so as to sense a radiation when the one or more second inspection devices emit the second radiation beam, wherein the additional radiation detection sensor is configured to communicate with the controller to send a sensing result to the controller; and
wherein based on the sensing result received from the additional radiation detection sensor, the controller is configured to:
determine that the second radiation beam has been emitted and control the one or more first inspection devices not to emit the first radiation beam, in response to the radiation being sensed by the additional radiation detection sensor; and
determine that the second radiation beam has disappeared and control the one or more first inspection devices to emit the first radiation beam immediately or after a delay of the first time period, in response to no radiation being sensed by the additional radiation detection sensor.

5. The multi-ray source inspection apparatus according to claim 4, further comprising: one or more rotary devices, wherein each of the one or more rotary devices is configured to support one or more of the one or more second inspection devices and is rotatable by an arbitrary angle in a range of 0-360 degrees at a predetermined angular velocity, so that the one or more of the one or more second inspection devices acquire the second transmission image of the object passing transversely through a rotation plane of the one or more rotary devices.

6. The multi-ray source inspection apparatus according to claim 5, wherein the additional radiation detection sensor is arranged along a rotation trajectory of the one or more rotary devices, so that the second radiation beam emitted when the one or more rotary devices rotate to an arbitrary angle is sensed by the additional radiation detection sensor.

7. The multi-ray source inspection apparatus according to claim 1, wherein the one or more first inspection devices are configured to emit the first radiation beam in the first pulse mode from a side portion, a top portion or a bottom portion of the inspection channel.

8. The multi-ray source inspection apparatus according to claim 1, wherein the object is a container.

9. An inspection method using multiple ray sources, comprising:
emitting a first radiation beam in a first pulse mode and acquiring a two-dimensional first transmission image by detecting a radiation transmitted through an object in an inspection channel, by using one or more first inspection devices; and
emitting a second radiation beam in a second pulse mode and acquiring a second transmission image comprising three-dimensional information by detecting a radiation transmitted through the object in the inspection channel, by using one or more second inspection devices,
wherein the first transmission image and the second transmission image of the object are respectively acquired by the one or more first inspection devices and the one or more second inspection devices after the object passes the inspection channel once.

10. The inspection method according to claim 9, further comprising:
inspecting the two-dimensional first transmission image to determine whether a suspicious object is comprised; and
locating a site of a suspicious object and determining the suspicious object at a corresponding site using the second transmission image, in response to determining that the inspected object comprising the suspicious object.

11. The inspection method according to claim 9, wherein the first pulse mode and the second pulse mode are configured such that: the first radiation beam starts to be emitted after the second radiation beam disappears or has disappeared for a first time period; and when the second radiation beam is emitted, the first radiation beam disappears or has disappeared for a second time period.

12. The inspection method according to claim 10, wherein the second pulse mode is separately preset by the one or more second inspection devices; and
wherein based on the second pulse mode, the first pulse mode is applied to an emission of the first radiation beam from the one or more first inspection devices.

13. The inspection method according to claim 11, further comprising:
providing an additional radiation detection sensor adjacent to the one or more second inspection devices to sense a radiation when the one or more second inspection devices emit the second radiation beam;
determining that the second radiation beam has been emitted and controlling the one or more first inspection devices not to emit the first radiation beam, in response to the radiation being sensed by the additional radiation detection sensor; and
determining that the second radiation beam has disappeared and controlling the one or more first inspection devices to emit the first radiation beam immediately or after a delay of the first time period, in response to no radiation being sensed by the additional radiation detection sensor.

14. The inspection method according to claim 12, further comprising:
using one or more rotary devices, wherein each of the one or more rotary devices is configured to support one or more of the one or more second inspection devices and is rotatable by an arbitrary angle in a range of 0-360 degrees at a predetermined angular velocity, so that the one or more of the one or more second inspection devices acquire the second transmission image of the object passing transversely through a rotation plane of the one or more rotary devices.

15. The inspection method according to claim 12, wherein the additional radiation detection sensor is arranged along a rotation trajectory of the one or more rotary devices, so that the second radiation beam emitted when the one or more rotary devices rotate to an arbitrary angle is sensed by the additional radiation detection sensor.

16. The inspection method according to claim 9, wherein the one or more first inspection devices are configured to emit the first radiation beam in the first pulse mode from a side portion, a top portion or a bottom portion of the inspection channel.

17. The inspection method according to claim 9, wherein the object is a container.
